# EUROPÄISCHE PATENTSCHRIFT

(11) **EP 3 408 147 B1**
(45) Veröffentlichungstag und Bekanntmachung des Hinweises auf die Patenterteilung: **22.01.2020**
(21) Anmeldenummer: 17701329.9
(22) Anmeldetag: 25.01.2017
(51) Int. Cl.: B60S 3/06

(54) **SENSORGESTEUERTE WASCHMITTELEINSPARUNG BEI AUTOWASCHANLAGEN**
SENSOR-CONTROLLED REDUCED CLEANING AGENT CONSUMPTION IN CAR WASHES
ÉCONOMIES DE PRODUIT DE LAVAGE COMMANDÉES AU MOYEN DE CAPTEURS DANS DES STATIONS DE LAVAGE AUTOMATIQUE

(30) Priorität: 28.01.2016 DE 102016101481
(43) Veröffentlichungstag der Anmeldung: 05.12.2018
(73) Patentinhaber: WashTec Holding GmbH, 86153 Augsburg (DE)
(72) Erfinder: FOERG, Oliver, 86199 Augsburg (DE); HEINZ, Bernhard, 86368 Gersthofen (DE)
(74) Vertreter: Schwarz und Baldus Patentanwälte
(86) Internationale Anmeldenummer: PCT/EP2017/051496
(87) Internationale Veröffentlichungsnummer: WO 2017/129592

(56) Entgegenhaltungen:
- EP-A1- 1 705 087
- EP-A1- 2 428 415
- WO-A1-03/070531

## Beschreibung

Die vorliegende Erfindung betrifft eine Portal-Fahrzeugwaschanlage, eine Steuereinheit für die Fahrzeugwaschanlage und ein Verfahren und ein Programm zur umweltfreundlichen und energiesparenden Steuerung einer Portal-Fahrzeugwaschanlage.

Im Stand der Technik ist es bekannt, Sensoren bereitzustellen, um den Waschvorgang sicher zu gestalten. So zeigt die WO2003070531 A1 ein Verfahren, um den Arbeitsbereich eines beweglichen Portals der Waschanlage über Sensoren zu überwachen, um z.B. den Waschvorgang bei eintretenden Personen automatisch unterbrechen zu können. Der Waschvorgang an sich wird durch die mittels der Sensoren erfassten Signale jedoch nicht beeinflusst. Des Weiteren werden die Sensorsignale im Stand der Technik nicht zur verfahrenstechnischen Steuerung des Waschprozesses verwendet.

Im Stand der Technik ist es weiter bekannt, dem Anwender vorkonfigurierte Waschprogrammmodule (z.B. Schnell-Wäsche, Wäsche mit Vorwäsche etc.) zur Auswahl zur Verfügung zu stellen. Diese vorkonfigurierten Waschprogrammabschnitte sind einer fest definierten Befehlsfolge zugeordnet. Mit dieser Befehlsfolge wird die Waschanlage dann gesteuert und betrieben. Zur Bestimmung des Waschprogramms werden dem Anwender auf einer Benutzerschnittstelle bislang somit nur vordefinierte Programmbausteine angeboten. Aufgrund der Vordefinition bzw. der festen Verdrahtung der Programmbausteine können diese im Stand der Technik somit zwangsläufig nicht modifiziert werden. In der Praxis hat es sich jedoch gezeigt, dass hier mehr Flexibilität gewünscht ist. Insbesondere sollten eine Waschanlagensteuerung und ein Waschanlagenbetrieb möglich sein, die/der an die aktuelle spezifische Situation angepasst ist.

Untersuchungen haben weiterhin gezeigt, dass es wünschenswert ist, dem Anwender noch mehr Gelegenheit zu geben, auf den Waschvorgang Einfluss zu nehmen. Insbesondere hat es sich als nachteilig erwiesen, dass die aktuelle Situation bzw. der jeweilige Zustand des Fahrzeugs (z.B. des Verschmutzungsgrades) und die Umgebungsbedingungen (z.B. Feuchtigkeit, Temperatur) nicht bei der Konfiguration des Fahrzeugwaschprogramms berücksichtigt werden können. Bei den bisherigen Systemen, konnte der Waschvorgang also nicht aufgrund des aktuellen Zustands geändert bzw. angepasst werden. So macht z.B. eine nach dem Waschvorgang stattfindende Trocknung keinen Sinn, falls es regnet. Als nachteilig erweist es sich bei den bekannten Systemen also, dass ein Fahrzeugwaschprogramm nur auf Basis von fest vordefinierten und unveränderlichen Waschprogrammabschnitten gesteuert werden kann.

Dokument EP 1 705 087 A1 offenbart eine gattungsgemäße Fahrzeugwaschanlage.

Die vorliegende Erfindung hat sich deshalb zur Aufgabe gestellt, den Betrieb von automatischen Fahrzeugwaschanlagen zu verbessern und diese insbesondere flexibler zu steuern. Bei einer nur leichten Verschmutzung sollte es z.B. möglich sein, diese Situation automatisch zu erkennen und dem Anwender situationsspezifische Waschprogrammabschnitte zur Auswahl anzubieten, so dass es möglich wird, Waschmittelsubstanzen bzw. Reinigungssubstanzen möglichst gezielt und reduziert einzusetzen. Darüber hinaus sollte eine höhere Flexibilität bei der Konfiguration des Waschvorganges durch den Anwender bereitgestellt werden, so dass es möglich wird, aufgrund eines aktuell ermittelten Zustandes, eine individualisierte Wäsche auslösen zu können und dabei beispielsweise eine Option anzubieten, um den Ressourcen- und/oder Energiebedarf für den Waschvorgang zu senken.

Diese Aufgabe wird erfindungsgemäß durch eine Fahrzeugwaschanlage, eine Steuereinheit und einem Verfahren sowie einem Computerprogrammprodukt gemäß den beiliegenden nebengeordneten Patentansprüchen gelöst.

Im Folgenden wird die Erfindung anhand der vorrichtungsgemäßen Aufgabenlösung und somit anhand der Steuereinheit beschrieben. Dabei erwähnte Merkmale, Vorteile oder alternative Ausführungsformen sind ebenso auch auf die anderen beanspruchten Gegenstände zu übertragen und umgekehrt. Mit anderen Worten können die gegenständlichen Ansprüche (die beispielsweise auf eine Waschanlage oder auf eine Steuereinheit gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch elektronische Schaltkreisbauteile oder Mikroprozessor-Module der Vorrichtungen ausgebildet und umgekehrt.

Gemäß einem Aspekt betrifft die Erfindung eine Steuereinheit zur Ansteuerung einer Fahrzeugwaschanlage, wobei die Steuereinheit mit einer als Benutzerschnittstelle fungierenden Ein- und Ausgabeeinheit in Datenaustausch steht, die zur Anzeige einer Menge von auswählbaren Waschprogrammabschnitten und zur Erfassung einer Auswahl zumindest eines der angezeigten Waschprogrammabschnitte bestimmt ist. Die Steuereinheit ist dazu bestimmt, aus der erfassten Auswahl (von Waschprogrammabschnitten) Steuerbefehle zur Ansteuerung der Fahrzeugwaschanlage zu berechnen. Erfindungsgemäß steht die Steuereinheit dazu mit einer Sensoreinheit in Datenaustausch, um Sensorsignale der Sensoreinheit zu empfangen. Die Steuereinheit ist dazu bestimmt, Waschprogrammabschnitte sozusagen auf Basis der empfangenen Sensorsignale Anwendungsfall-spezifisch und in Antwort auf die erfassten Sensorsignale und Sensordaten zu konfigurieren und zu berechnen. Die berechneten Waschprogrammabschnitte werden dann zur Anzeige auf der Ein- und Ausgabeeinheit zum Zwecke der Auswahl durch den Anwender gebracht. Aufgrund der erfassten Auswahlsignale, die die vom Anwender ausgewählten Waschprogrammabschnitte definieren, werden dann Steuerbefehle erzeugt und zur Steuerung an die Fahrzeugwaschanlage gesendet.

Im Kern betrifft die vorliegende Erfindung damit eine situative und dynamische Steuerung einer Waschanlage, basierend auf aktuell erfassten Sensordaten, Umgebungsbedingungen und/oder basierend auf Kundenvorgaben (Konfigurationen). Dabei können die einzelnen Maschinenbauteile der Fahrzeugwaschanlage bzw. die jeweiligen Aggregate der Fahrzeugwaschanlage (wie z.B. das Waschportal selbst, Sprühdüsenaggregate, Spülaggregate, Trocknungsaggregate etc.) modular und dezidiert angesteuert werden in Abhängigkeit von den Sensordaten und/oder Konfigurationen (die aus Konfigurationsdaten erzeugt werden können, die der Anwender über eine bereitgestellte Benutzeroberfläche eingeben kann).

Die Erfindung hat einige Vorteile. So wird es erstmals möglich, individualisierte Waschprogrammabschnitte für den jeweiligen aktuellen Fall auf Basis von Sensorsignalen zu konfigurieren und diese zu einem Waschprogramm zu kombinieren. Dem Anwender kann eine spezifisch für ihn zugeschnittene, maßgeschneiderte Fahrzeugwäsche angeboten werden und zwar nicht nur auf Basis von festen, vordefinierten Waschprogrammen, sondern auf Basis von individualisierten und aktuell und spezifisch konfigurierten Waschprogrammabschnitten. Erfindungsgemäß können die einzelnen Waschprogrammabschnitte situativ konfiguriert werden. Des Weiteren kann der für den Waschvorgang erforderliche Ressourcenbedarf deutlich gesenkt werden und zwar nicht nur in Hinblick auf die Dosierung der zu applizierenden Reinigungsmittel, sondern auch in Hinblick auf den Gesamtenergiebedarf. Beispielsweise benötigt die Trocknung des Fahrzeugs nach dem Waschvorgang viel Energie. Die Trocknung kann aber entfallen, wenn die Sensoreinheit erfasst hat, dass eine Luftfeuchtigkeit einen vordefinierbaren Schwellenwert überschreitet oder, dass es Niederschlag hat.

Im Folgenden wird die Erfindung für eine Portalwaschanlage beschrieben. Die Waschanlage umfasst somit einen mobilen Portalträger mit einem Waschportal. Der Anwender bedient im Vorfeld eine Benutzeroberfläche und konfiguriert sein Waschprogramm spezifisch und situativ in Abhängigkeit von Umgebungsbedingungen und seinen Vorgaben. Zur Fahrzeugreinigung ist es vorgesehen, dass der Fahrzeugführer während der Reinigung das Fahrzeug verlässt, so dass das gebuchte Waschprogramm auf unterschiedlichen Aggregaten der Fahrzeugwaschanlage ausgeführt werden kann. Dazu wird das Waschportal mit seinen Aggregaten zum Zwecke der Reinigung relativ zum Fahrzeug bewegt. Für den Fachmann liegt es jedoch auf der Hand, dass die Erfindung ebenso auf andere Waschanlagen, wie z.B. auf Waschstraßen, angewendet oder übertragen werden kann, die über ein Elektronikbauteil und auf Basis von Anwendereingaben gesteuert werden. Im Unterschied zu den Portalwaschanlagen bleibt der Fahrer während der Reinigung in einer Waschstraße im Fahrzeug und teilt das gewünschte Waschprogramm dem Personal der Waschstraße mündlich mit.

Die Steuereinheit ist eine elektronische Einheit, die in Hardware als integrierter Schaltkreis (z.B. als FGPA, field-programmable gate array) oder in Software ausgebildet sein kann. Die Steuereinheit dient zur Ansteuerung der Waschanlage. Die Steuereinheit kann unmittelbar in einem Bauteil der Waschanlage implementiert sein oder mittelbar auf einer Prozessoreinheit, die mit der Waschanlage in Datenaustausch steht. Die erfindungsgemäße Steuereinheit steht mit der Sensoreinheit in Datenaustausch. Dabei kann es sich vorzugsweise um eine unidirektionale Datenverbindung handeln, über die die Sensoreinheit erfasste Sensordaten an die Steuereinheit sendet. Die Sensordaten repräsentieren einen Zustand des zu reinigenden Fahrzeugs, Teilen davon und/oder technischen Waschbedingungen bzw. einer Waschumgebung, wie z.B. einer Luftfeuchtigkeit, Temperatur, Umweltschutzanforderungen etc. Die Sensordaten werden mittels einer Steuerlogik der Steuereinheit in Steuerbefehle zur zustandsabhängigen Ansteuerung der Waschanlage mit spezifisch erzeugten Waschprogrammabschnitten zur Ausgabe und Auswahl auf einer Benutzeroberfläche umgesetzt.

Die Steuerlogik ist ein Schaltkreis und/oder ein Programm, der/das bestimmt, wie die Sensordaten, die von unterschiedlichen Sensoren stammen können, verrechnet werden und welche Waschprogrammabschnitte jeweils auf Basis der erfassten Sensorsignale und/oder Sensordaten erzeugt werden sollen.

Die Sensoreinheit umfasst mehrere Sensormodule. Die Sensormodule umfassen ihrerseits mehrere Sensoren. Die Sensormodule können stationär und dauerhaft an zumindest einem Bauteil oder vorübergehend (z.B. an dem Fahrzeug) befestigt sein. Die Sensormodule und/oder die Sensoren sind vorzugsweise an unterschiedlichen Positionen vorgesehen. Die Sensoren und/oder die Sensormodule können an der Waschanlage selbst, an Bauteilen der Waschanlage und/oder an den jeweiligen Schnittstellen zwischen Bauteil und Waschanlage verbaut sein. Vorzugsweise sind die Sensoren und/oder die Sensormodule jedoch nicht an der Waschanlage oder an deren Bauteilen angeordnet, sondern extern von der Waschanlage. Sie befinden sich somit außerhalb der Waschanlage. Die Sensoren und/oder die Sensormodule können temporär am zu reinigenden Fahrzeug und/oder an einem Bedienterminal ausgebildet sein. Darüber hinaus ist das Sensormodul in der bevorzugten Ausführungsform der Erfindung mit einer Empfangseinheit ausgebildet, die dazu dient, Sensordaten von externen Signalgebern oder externen (z.B. zentralen) Servern einzulesen. So kann die Sensoreinheit ausgebildet sein, Wetterdaten von einem Server eines Wetterdienstes zu erfassen. Dabei kann es sich um aktuelle lokale Wetterdaten an der geografischen Position des Waschortes als auch um Prognosedaten handeln. Die geografische Position kann über GPS- Sensoren und/oder über Locations-basierte Dienste automatisch erfasst werden. Die Sensoren sind vorzugsweise als Sensoren unterschiedlichen Sensortyps verbaut und umfassen neben optischen Sensoren, akustische Sensoren, Feuchtigkeitssensoren, Positions- und/oder Näherungssensoren, Temperatursensoren, Hallsensoren und anderen Sensortypen auch Schalter, Taster und/oder Potentiometer etc.

Die Sensoren dienen zur Erfassung von analogen und/oder digitalen Signalen. Bei den erfassten Signalen kann es sich um diskrete Messwerte (z.B. Temperatur) oder um kontinuierliche Sensorsignale (z.B. Temperaturentwicklung über die Zeit) handeln.

In einer bevorzugten , kompakten Ausführungsform der Erfindung dient die Sensoreinheit zugleich zur Erfassung von Eingabesignalen des Anwenders auf der Benutzeroberfläche, wobei die erfassten Eingabesignale eine Menge von Konfigurationseinstellungen des Anwenders umfassen (z.B. Konfigurationen hinsichtlich einer Einwirkzeit eines Reinigungsmittels für ein Waschaggregat aus der Menge der Waschaggregate, hinsichtlich der Auswahl der Reinigungsmittel, hinsichtlich der verfahrenstechnischen Applikation (z.B. in geschäumter Form oder nicht geschäumter Form) hinsichtlich des Energieverbrauchs etc.). Dabei können beispielsweise über eine externe Sensoreinheit erfasste Sensordaten auf der Benutzeroberfläche angezeigt und durch einen Benutzereingabe bestätigt werden.

Die Gesamtheit aller Sensorsignale repräsentiert einen Waschzustand. Dabei kann erfindungsgemäß im Vorfeld konfiguriert werden, welche Sensorsignale für die Berechnung des Waschzustandes berücksichtigt werden sollen (beispielsweise macht die Erfassung und Berücksichtigung der Temperatur keinen Sinn, wenn diese immer konstant ist). Der Waschzustand umfasst einen Zustand des Fahrzeugs (z.B. Verschmutzungsgrad, Feuchtigkeit auf der Oberfläche) und/oder einen Zustand der Waschbetriebsumgebung (Temperatur, Luftfeuchtigkeit etc.). Der Waschzustand ist somit ein mehrdimensionaler Vektor aus unterschiedlichen technischen Parametern oder Zustandsgrößen.

Die Waschprogrammabschnitte umfassen Prozesse des Reinigungsvorganges, die auf unterschiedlichen Arbeitsaggregaten (im Folgenden auch Aggregat oder Waschaggregat genannt) oder Betriebsmitteln der Waschanlage sequentiell oder parallel ausgeführt werden können. Die Waschprogrammabschnitte sind damit eine Sammlung unterschiedlicher Reinigungsprogrammbausteine oder Reinigungsschritte, die zu einem Waschvorgang kombiniert werden können, beispielsweise insbesondere:
- Eine Felgen-Wäsche unter Verwendung von konfigurierbaren Reinigungsmittel(n)
- Eine Insektenreinigung mit einer konfigurierbaren Einwirkzeit des ebenfalls konfigurierbaren Insektenreinigungsmittels
- Eine Politur mit einem konfigurierbaren oder auswählbaren Politurmittel
- Eine Unterboden-Wäsche mit einer konfigurierbaren Intensität
- Eine Ober-Wäsche mit einer konfigurierbaren Intensität
- Eine berührungslose Vorwäsche mit Wasser oder anderen Medien in konfigurierbarer Qualität, Dauer und/oder konfigurierbarem Energieverbrauch
- Eine auf einen auswählbaren Wert konfigurierbare Einwirkzeit eines Reinigungsmittels
- Eine auf einen auswählbaren Wert konfigurierbare Dauer eines Waschschrittes
- Eine auf einen auswählbaren Wert konfigurierbare Dauer des gesamten Waschvorganges
- Eine Oberflächenversiegelung mit einem auswählbaren Versiegelungsmittel
- Eine deaktivierte Trocknung
- Eine auf einen auswählbaren Wert konfigurierbare Trocknungszeit
- Eine auf einen auswählbaren Wert konfigurierbare Gebläseleistung bei der Trocknung etc.

Die jeweiligen Konfigurationen können über Auswahlsignale auf der Benutzeroberfläche erfasst werden. Dazu können Konfigurationsmenüs zur Auswahl von bestimmten Konfigurationen ausgegeben werden, unter denen der Anwender dann einen oder mehrere der angebotenen Konfigurationen auswählen kann. Alternativ kann die Auswahl auch automatisch auf Basis von erfassten Sensorsignalen ausgeführt werden.

Mit anderen Worten kann der Anwender erfindungsgemäß durch seine Eingabe und Einstellungen bzw. Vorgaben, die Arbeitsaggregate bestimmen, die überhaupt für die Wäsche in Betrieb genommen werden und wie diese Arbeitsaggregate betrieben werden (wie lange, mit welchem Druck, mit welcher Temperatur, mit welcher Reinigungsmittelkonzentration etc.).

Erfindungsgemäß sind die Waschprogrammabschnitte nicht mehr vorkonfiguriert (z.B. "Schnellwäsche", "Intensivwäsche", "mit Vorwäsche"), sondern der Anwender kann sich die Abschnitte selbst konfigurieren. Dazu werden ihm auf einer Benutzeroberfläche Konfigurationseinstellungen zur Auswahl angeboten, in Form von Auswahlmenüs z.B. für die Einstellung der Einwirkzeit eines Reinigungs- oder Pflegemittels und/oder für die Dauer und/oder Intensität des Waschprogrammabschnittes etc. Dabei kann ein ausgewählter Waschprogrammabschnitt auch mehrfach ausgewählt werden, so dass er in Folge zur Anwendung kommt. Auf Basis der ausgewählten Konfigurationseinstellungen (z.B. lange Einwirkzeit, langsame Portalvorschubgeschwindigkeit, hochwertige Produkte) erfolgt dann situationsangepasst die Berechnung der spezifisch konfigurierten Waschprogrammabschnitte (z.B. "Intensivwäsche - hohe Qualität") und deren Ausgabe auf der Benutzeroberfläche. Nach der Anzeige der konfigurierten Waschprogrammabschnitte auf der Benutzeroberfläche kann der Anwender Auswahlsignale eingeben, die dann wiederum in Steuerbefehle umgesetzt werden, um die Waschanlage spezifisch anzusteuern.

Die Ein- und Ausgabeeinheit fungiert als Benutzerschnittstelle. Sie kann in ein Bedienterminal eingebaut sein oder mit diesem in Datenaustausch stehen. Vorzugsweise handelt es sich um eine grafische Benutzerschnittstelle. Alternativ oder kumulativ können hier jedoch auch andere Arten von Schnittstellen eingesetzt werden, wie z.B. eine akustische Schnittstelle, mit der es möglich wird, dass der Anwender über gesprochene Befehle seine Eingaben tätigt. Bei Verwendung einer grafischen Oberfläche kann beispielsweise ein kapazitiver Touchscreen verwendet werden. Vorzugsweise verfügt der Touchscreen über eine Multi-Sensor-Funktionalität, so dass auch gleichzeitige Berührungen detektiert werden können. Üblicherweise umfasst der Touchscreen neben dem Display (der eigentlichen Anzeigeeinheit) einen Touchscreensensor als Eingabeeinheit für Anwendersignale, einen Controller und fakultativ einen Treiber, der in dem Bedienterminal angeordnet sein kann. In einer alternativen und ebenfalls bevorzugten Ausführungsform der Erfindung kann der Touchscreensensor als projiziert-kapazitiver Sensor ausgebildet sein ("PCT" = "Projected Capacitive Touch"). Dabei nutzt der Sensor zwei Ebenen mit einem leitfähigen Muster (beispielsweise Streifen oder Rauten). Die Ebenen sind voneinander isoliert angebracht. Befindet sich ein Finger am Kreuzungspunkt zweier Streifen, so ändert sich die Kapazität des Kondensators, und es kommt ein größeres Signal am Empfängerstreifen an. Diese Signaländerung lässt sich somit genau anhand der X-und Y-Koordinaten messen, wobei auch mehrere Berührungspunkte exakt definierbar sind. Der Stromfluss von den Ecken des Touchscreens zum Berührungspunkt ist proportional zu den XY-Koordinaten. Der wesentliche Vorteil dieses Systems ist, dass der Sensor auf der Rückseite des Deckglases angebracht werden kann, da die Berührungserkennung durch das Glas "hindurchprojiziert" wird. So erfolgt die Bedienung auf der praktisch verschleißfreien Glasoberfläche. Ferner ist die Erkennung von Gesten und mehreren Berührungen (also Multi-Touch) möglich.

In anderen Ausführungsform der Erfindung können jedoch auch resistive oder induktive oder andere Sensortechnologien für die Benutzeroberfläche des Bedienterminals zur Anwendung kommen. Die Benutzeroberfläche (auch Monitor genannt) dient zur Ausgabe von Waschprogrammabschnitten, die auf Basis der Sensordaten erzeugt worden sind. Der Anwender kann die angezeigten Waschprogrammabschnitte gemäß seinen Wünschen spezifizieren und durch Eingabe zumindest eines Auswahlsignals auswählen. Dabei kann er auch mehrere der angezeigten Waschprogrammabschnitte auswählen. Die Auswahl umfasst zumindest einen, vorzugsweise mehrere, Waschprogrammabschnitt(e). Auf der Benutzeroberfläche kann auch ein Menü dargestellt werden, das spezifisch und für den Anwendungsfall individualisiert erzeugt wird und mit Hilfe dessen der Anwender durch den Prozess zur Erzeugung seines Waschprogramms geführt wird. Dabei können ihm auch Zusatzinformationen zur Verfügung gestellt werden (z.B. wieviel Energie für die bereits ausgewählten Schritte aufgewendet werden muss und/oder welche Kosten auf ihn zukommen).

In einer vorteilhaften Weiterbildung der Erfindung ist die Steuerlogik der Steuereinheit dazu ausgebildet, aus den empfangenen Sensorsignalen einen Zustand, den Waschzustand zu ermittelten und diesen mit einem in einem Speicher abgelegten Referenz-Zustand zu vergleichen, um eine zustandsabhängige Berechnung der Waschprogrammabschnitte auszuführen. Durch den Abgleich mit Referenzwerten, die in einer zentralen Datenbank hinterlegt sein können, kann die Steuerungsaufgabe beschleunigt durchgeführt werden.

Gemäß einer bevorzugten Ausführungsform der Erfindung umfasst die Steuerlogik ein Optimierungsmodul, das die berechneten Waschprogrammabschnitte hinsichtlich einer Dosierung von Reinigungsmitteln, eines Wasserverbrauchs und/oder hinsichtlich eines Energieverbrauchs optimiert. Optional kann im Vorfeld konfiguriert werden, dass hier noch andere Optimierungskriterien berücksichtigt werden können, wie z.B. eine Optimierung in Hinblick auf die Kosten und/oder die Dauer des Waschvorganges etc. Erfindungsgemäß kann das Steuermodul zustandsspezifische Vorschläge zur Optimierung erzeugen. In einer bevorzugten Ausführungsform der Erfindung können die Optimierungskriterien im Vorfeld - in einer Definitionsphase zum Konfigurieren der Steuereinheit - konfiguriert werden. Um inkonsistente und konfligierende Eingaben zu vermeiden kann es in einer Weiterbildung der Erfindung vorgesehen sein, die getätigten Eingaben des Anwenders auf Konsistenz zu überprüfen und gegebenenfalls Korrekturvorschläge anzubieten und Korrektureingaben einzufordern, falls der Anwender z.B. auswählt, dass eine schnelle Wäsche mit wenig Energie und kurzer Zeit durchgeführt werden soll. Dabei kann auch ein Warnhinweis auf der Benutzeroberfläche mit weiteren Informationen ausgegeben werden. Es können auch Zusatzinformation zu den mit der Auswahl des Anwenders verbundenen Folgen ausgegeben werden, z.B. zu den mit der Auswahl des Anwenders einhergehenden Kosten oder der mit der Auswahl der Waschprogrammabschnitte verbundenen Zeit und/oder des Energieverbrauchs. Auf Basis dieser Daten, wird dann eine Korrekturoption auf der Benutzeroberfläche bereitgestellt, mit der der Anwender seine bisherigen Eingaben revidieren kann,

Gemäß einer weiteren, bevorzugten Ausführungsform der Erfindung umfasst die Steuerlogik ein Konfigurationsmodul, das die berechneten Waschprogrammabschnitte hinsichtlich vorgebbarer und anwender-individueller Kriterien konfiguriert. Hier kann z.B. definiert werden, dass ein Anwender X bei einem Fahrzeug Y stets einen bestimmten Waschvorgang ausgeführt haben möchte und/oder dass er stets den Waschvorgang hinsichtlich einer Ressourceneinsparung von Wasser und Energie optimiert haben möchte. Diese benutzer-spezifischen Einstellungen werden in einem Speicher abgelegt und können somit für spätere Waschvorgänge für denselben Nutzer X und/oder für dasselbe Fahrzeug Y zur Bestätigung abgerufen werden. Der Speicher kann ein mobiler Speicher in Form einer Transponderkarte oder ein stationärer Speicher, z.B. in Form einer Datenbank sein.

Gemäß einer weiteren, bevorzugten Ausführungsform der Erfindung umfasst die Sensoreinheit - wie vorstehend erwähnt - mehrere Sensoren, die unterschiedliche physikalische Messwerte eines Fahrzeugs und/oder einer Waschumgebung erfassen, insbesondere einen Temperatursensor, einen Zeitsensor (z.B. in Form einer Uhr), einen Luftfeuchtigkeitssensor, einen Sensor zur Erfassung einer Fahrzeuggröße und/oder eines Fahrzeugverschmutzungsgrades. In einer alternativen Ausbildung kann auch ein Touchkey oder ein anderes Eingabefeld auf der Benutzerschnittstelle bereitgestellt werden, über das der Anwender die Daten, die der Sensor automatisch erfasst, manuell bestätigt oder die Daten direkt eingibt. Die Sensoreinheit weist in der Regel zumindest einen und vorzugsweise mehrere Sensoren an unterschiedlichen Bauteilen und/oder Positionen in der Regel und bevorzugt außerhalb Fahrzeugwaschanlage auf. Die Sensoreinheit kann auch mit externen Sensoren (z.B. am Fahrzeug und/oder auf einem entfernten Server, wie beispielsweise einer Wetterstation) in Datenaustausch stehen.

Die vorstehend beschriebene Ansteuerung einer Fahrzeugwaschanlage ist komplexer, da eine Vielzahl von Sensordaten berücksichtig wird. Deshalb ist es vorgesehen, dass die Sensor-signalbasierte Steuerungsfunktion wahlweise über einen Sensor-Schalter aktivierbar und deaktivierbar ist. Wenn sie deaktiviert ist, wird die Steuerung auf Basis von vorkonfigurierten Programmmodulen und nicht auf Basis von Sensordaten ausgeführt.

Gemäß einem anderen Aspekt betrifft die Erfindung eine Fahrzeugwaschanlage, die über eine Steuereinheit in Verbindung mit einer Ein- und Ausgabeeinheit gesteuert wird, mit folgenden in Datenaustausch stehenden Modulen:
- Einer Steuereinheit, wie vorstehend beschrieben;
- Der Ein- und Ausgabeeinheit, auf der zur Steuerung der Fahrzeugwaschanlage die dynamisch berechneten, zustandsabhängigen Waschprogrammabschnitte zur Auswahl ausgegeben werden
- Einer Sensoreinheit, die dazu bestimmt ist, automatisch Sensorsignale zu erfassen und zur Berechnung der Steuerbefehle an die Steuereinheit weiterzuleiten.

Die einzelnen Einheiten sind, wie vorstehend beschrieben, elektronische Module, die über einen geeigneten Kommunikationskanal in Datenaustausch stehen, vorzugsweise über eine drahtlose Netzwerkverbindung oder über ein Mobilfunknetz, Bluetooth oder eine NFC-Schnittstelle. Selbstverständlich können die Einheiten auch mit einem zentralen Server oder einer Datenbank verbunden sein, beispielsweise über eine WLAN, LAN oder eine andere geeignete Verbindung.

Gemäß einem anderen Aspekt betrifft die Erfindung ein Verfahren zur Ansteuerung einer Fahrzeugwaschanlage mit folgenden Verfahrensschritten:
- Erfassen von Sensorsignalen und/oder Konfigurationen, aus denen ein Waschzustand berechnet wird,
- Berechnen von Waschprogrammabschnitten in Antwort auf den berechneten Waschzustand und/oder in Antwort auf die erfassten Sensorsignale
- Weiterleiten der berechneten Waschprogrammabschnitte zur Anzeige auf einer Benutzerschnittstelle (vorzugsweise der Ein- und Ausgabeeinheit)
- Einlesen der auf der Benutzerschnittstelle erfassten Auswahlsignale zur Auswahl eines der angezeigten Waschprogrammabschnitte
- Erzeugen von Steuerbefehlen zur Ansteuerung der Fahrzeugwaschanlage auf Basis der erfassten Auswahlsignale.

Auf der Benutzerschnittstelle können neben den Auswahlsignalen des Anwenders zusätzlich Konfigurationseinstellungen und/oder Optimierungskriterien für einen Waschprozess der Fahrzeugwaschanlage erfasst werden (z.B. umfassend: Konfiguration eines Waschmittelverbrauchs, Energieverbrauchs, Einstellung der für den Waschprozess benötigen Zeit, Einstellung der Kosten des Waschprozesses). Die Steuerbefehle werden dann auf Basis der erfassten Auswahlsignale, Optimierungskriterien und/oder Konfigurationseinstellungen erzeugt.

Auf der Eingabe- und Ausgabeeinheit kann in Antwort auf die erfassten Sensorsignale eine Grafikdarstellung (z.B. durch Ausgabe eines Hinweisfeldes mit Zusatzinformationen) angezeigt werden. Des Weiteren kann ein Ausgabefeld auf der Benutzeroberfläche bereitgestellt werden, auf dem die erfassten Sensordaten angezeigt werden. In einer Weiterbildung der Erfindung kann ein Bestätigungsfeld ausgegeben werden, mit dem der Anwender bestätigen oder verwerfen kann, dass die erfassten Sensordaten (z.B. zum Verschmutzungsgrad) jeweils zur Berechnung und Konfiguration der Waschprogrammabschnitte verrechnet werden sollen.

In einer vorteilhaften Weiterbildung der Erfindung werden die ausgeführten Steuerbefehle während des Betriebs der Fahrzeugwaschanlage mitgeführt und einer Berechnungseinheit (oder einem Prozessor der Steuereinheit) zugeführt. Die Berechnungseinheit kann weitere Maßnahmen triggern, wie unter anderem die automatische Berechnung der Kosten für den Waschprozess und das Weiterleiten dieses Kosten-Datensatzes an eine Ausgabeeinheit. Der Kosten-Datensatz kann auch an ein separates Abrechnungsinstitut weitergeleitet werden, so dass die Bezahlung nach dem Waschvorgang ausgeführt werden kann.

Auch werden die ausgeführten Steuerbefehle in einem Speicher abgelegt, um für spätere Berechnungen verwendbar zu sein. Das hat den Vorteil, dass der Anwender bei Bedarf immer wieder auf sein spezifisch nach seinen Vorgaben konfiguriertes Waschprogramm zugreifen kann. Dazu wird in einer Datenbank eine Zuordnung zwischen dem Anwender oder einem diesen identifizierenden Datensatz (z.B. einer eineindeutigen Mobilfunkkennung, die dem Anwender zugeordnet ist, z.B. einer IMSI etc.) und den erzeugten Steuerbefehlen und/oder seinen Auswahlsignalen gespeichert.

Ein wichtiger technischer Vorteil der erfindungsgemäßen Lösung ist darin zu sehen, dass die einzelnen, jeweils in der Portalwaschanlage verbauten Aggregate spezifisch angesteuert werden können. Dies kann auch software-basiert erfolgen, indem beispielsweise durch den Anwender konfiguriert wird, dass eine bestimmte Reinigungsmittelzusammensetzung (Waschmittelpaste) zur Wäsche verwendet werden soll. So kann auch bestimmt werden, wieviel Wasser in welcher Qualität und Temperatur zugesetzt werden soll, um z.B. eine möglichst umweltschonende Wäsche definieren und zur Ausführung bringen zu können.

Eine weitere Aufgabenlösung besteht in einem Computerprogrammprodukt, das in einen Speicher eines Computers oder einer elektronischen Einheit geladen oder ladbar ist mit einem Computerprogramm zur Durchführung des oben näher beschriebenen Verfahrens, wenn das Computerprogramm auf dem Computer oder der elektronischen Einheit ausgeführt wird.

Eine weitere Aufgabenlösung sieht ein Computerprogramm vor zur Durchführung aller Verfahrensschritte des oben näher beschriebenen Verfahrens, wenn das Computerprogramm auf einem Computer oder einem elektronischen Gerät ausgeführt wird. Dabei ist es auch möglich, dass das Computerprogramm auf einem für den Computer oder das elektronische Gerät lesbaren Medium gespeichert ist.

In der folgenden detaillierten Figurenbeschreibung werden nicht einschränkend zu verstehende Ausführungsbeispiele mit deren Merkmalen und weiteren Vorteilen anhand der Zeichnung besprochen.

### Kurze Beschreibung der Figuren

- Fig. 1: zeigt in einer schematischen Übersichtsdarstellung eine Fahrzeugwaschanlage, die über eine erfindungsgemäße Steuereinheit gesteuert wird.
- Fig. 2: ist eine schematische Darstellung einer erfindungsgemäßen Steuereinheit in Datenaustausch mit einer Sensoreinheit und einer Ein- und Ausgabeeinheit
- Fig.3: ist ein Ablaufdiagramm gemäß einer bevorzugten Ausführungsform der Erfindung.

### Detaillierte Beschreibung der Figuren

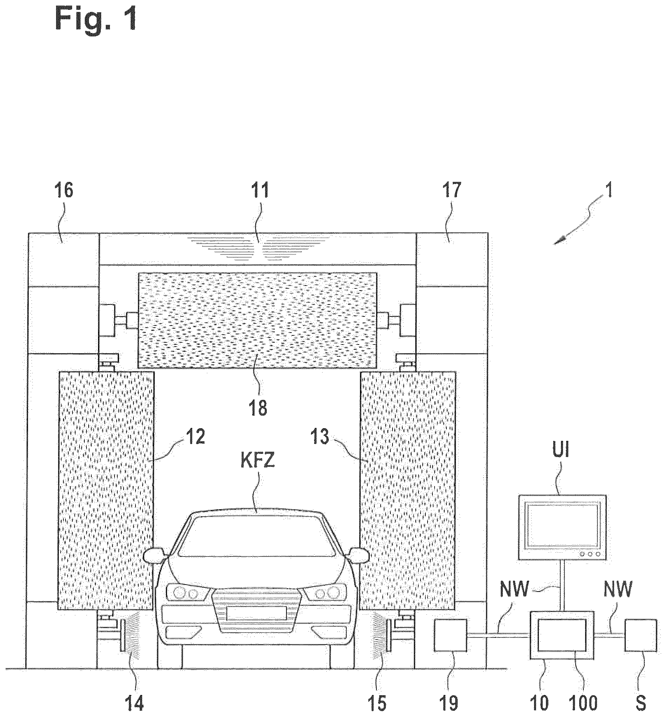

Im Folgenden wird die Erfindung anhand von Ausführungsbeispielen im Zusammenhang mit den Figuren näher beschrieben. Die Erfindung betrifft die sensor-getriggerte Steuerung einer Fahrzeugwaschanlage 1, die als Portalwaschanlage ausgebildet und schematisch in Figur 1 dargestellt ist.

**Fig. 1** zeigt eine schematische Vorderansicht einer Portalwaschanlage 1 mit unterschiedlichen baulichen Aggregaten, wie einem Waschportal mit zwei vertikalen Portalträgern 16, 17 zwischen denen das zu waschende Kraftfahrzeug KFZ während der Wäsche hindurch bewegt wird. Die vertikalen Portalträger 16, 17 tragen jeweils zwei im wesentlich ebenfalls vertikal ausgerichtete Waschbürsten 12, 13. Im oberen Bereich des Waschportals ist eine horizontale Haltetraverse 11 mit einer horizontalen Dachwaschbürste 18 angeordnet. Im unteren Bereich des Waschportals können rechts und links Felgenwaschbürsten 14, 15 angeordnet sein. Die Waschbürsten 12, 13, 14, 15, 18 sind rotierend antreibbar und werden über eine Steuereinheit 10 angesteuert. Die in Figur 1 dargestellte Ausführungsform der Erfindung ist jedoch nur als Beispiel zu verstehen. Für den Fachmann liegt es auf der Hand, dass auch weniger oder auch weitere, zusätzliche Waschbürsten und/oder Waschaggregate (z.B. in Form von Hochdruckdüsen) in die Portalwaschanlage 1 integriert sein können. Das Waschportal kann auf zumindest einer und vorzugsweise zwei Fahrschienen in einer Längsrichtung der Portalwaschanlage 1 verfahrbar sein.

Die Fahrzeugwaschanlage 1 und die einzelnen Arbeitsaggregate stehen in Datenaustausch mit der Steuereinheit 10. Dazu ist in der Fahrzeugwaschanlage 1 ein portalinternes Steuermodul 19 vorgesehen, das dazu ausgebildet ist, Steuerbefehle B von der Steuereinheit 10 zu empfangen und umzusetzen. Das waschanlageninterne Steuermodul 19 ist in Figur 1 der Einfachheit halber im rechten Portalträger 17 eingezeichnet. Dies soll lediglich eine schematische Anordnung darstellen. Üblicherweise wird das waschanlageninterne Steuermodul 19 nicht in einem Portalträger, sondern in einem zentralen Bereich (z.B. in einem oberen Segment der Anlage) befestigt sein. Die Steuereinheit 19 dient zur Berechnung und Ausgabe von Steuerbefehlen B. um das waschanlaaeninterne Steuermodul 19 mit Steuerdaten zu versorgen und zu steuern. Die Steuerbefehle B umfassen dazu mehrere Steuerdatensätze zur Positionierung der verschiedenen Bürsten und Waschaggregate und zur Einstellung der Rotationsgeschwindigkeit sowie der Waschmittelzusammensetzung und -dosierung in Abhängigkeit von den erfassten Sensordaten und/oder den Konfigurationen des Anwenders.

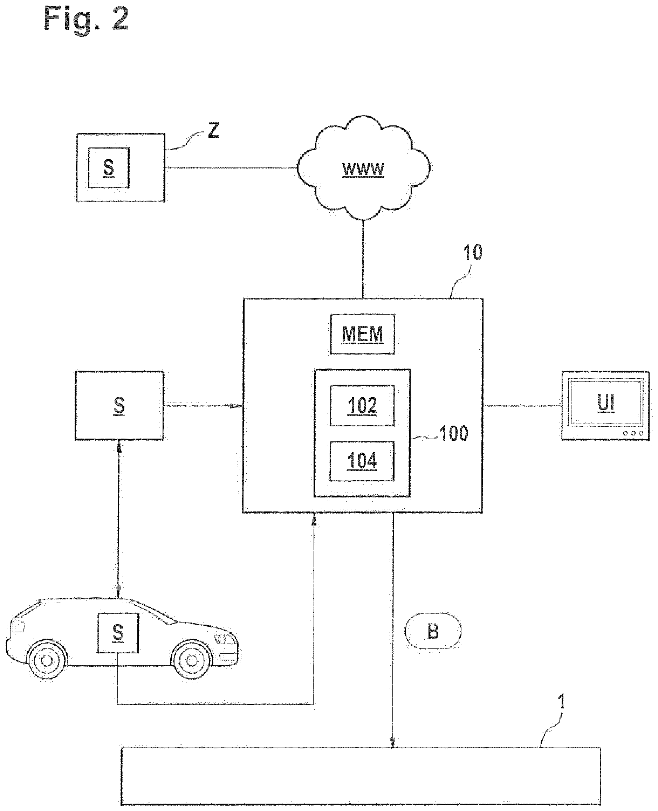

Die Steuereinheit 10 umfasst ihrerseits mehrere Bauteile und wird unter Bezugnahme auf **Figur 2** näher beschrieben. Vorzugsweise umfasst die Steuereinheit 10 einen lokalen Speicher MEM zur Datenspeicherung. Dabei können in dem Speicher MEM sowohl Steuerbefehle, ausgeführte Steuerbefehle, erfasste Sensordaten, Konfigurationseinstellungen und/oder Optimierungskriterien hinterlegt sein. Weiter umfasst die Steuereinheit 10 eine Steuerlogik, insbesondere eine elektronische Steuerlogikschaltung 100. Die Steuereinheit 10 steht in Datenaustausch mit der Waschanlage 1, mit einer Sensoreinheit S, die sich üblicherweise nicht in oder an der Waschanlage befinden wird (sondern außerhalb) und mit einer Ein- und Ausgabeeinheit UI, die als Benutzerschnittstelle - vorzugsweise in Form eines Bedienterminals - für den Anwender dient. Die Steuereinheit 10 kann auch in Datenaustausch mit einem zentralen Server Z stehen, auf dem ebenfalls Sensordaten verfügbar sind. Der Server Z kann über ein öffentliches Netzwerk, wie das Internet www zugreifbar sein.

Die Sensoreinheit S weist eine Vielzahl von sensorbasierten Instanzen auf und kann unterschiedliche Sensoren umfassen, die unterschiedliche technische Messwerte aufnehmen. Vorzugsweise dienen die Sensoren zur Erfassung von Sensorsignalen des zu waschenden Fahrzeugs in einem Zustand vor der Wäsche, wie z.B. einen Verschmutzungsgrad durch optische Sensoren und eine Feuchtigkeit bzw. Nässe auf der Oberfläche des zu reinigenden Fahrzeugs. Je nach gewählter Konfiguration können hier noch weitere Größen erfasst werden. Die Sensoreinheit S ist vorzugsweise dazu ausgelegt, Waschumgebungsbedingungen (Wetter, Straßenverhältnisse etc.) und/oder Fahrzeug-bezogenen Signale zu erfassen (Verschmutzungsgrad, Temperatur der Karosserie etc.). Dazu ist die Sensoreinheit S als verteiltes System ausgebildet, wie in Fig. 2 dargestellt. Zum einen sind Sensoren in einer Instanz der Sensoreinheit S am Fahrzeug selbst angeordnet. Dabei handelt es sich um temporär und nur für einen kurzen Zeitraum vor der Wäsche am Fahrzeug befestigte Sensoren. Auch ist es möglich, dass keine Sensoren am Fahrzeug selbst angeordnet werden, sondern dass das Fahrzeug passiv an einer Sensoreinheit vorbeifährt, die zur Signalerfassung am Fahrzeug ausgebildet ist. Dabei kann es sich z.B. um eine CCD-Kamera handeln. Eine weitere Sensorinstanz kann am Bedienterminal UI der Waschanlage angeordnet sein, um die Waschumgebungsparameter (wetter-basierte Signale) zu erfassen.

In einer bevorzugten Ausführungsform der Erfindung ist die Sensoreinheit S Teil eines externen Systems (z.B. Server eines Wetterdienstes) und die erfindungsgemäße Fahrzeugwaschanlage 1 umfasst lediglich eine Schnittstelle zum Einlesen der Sensordaten des externen Sensorsystems und Konfigurationsdatensätze, die der Anwender über die Benutzerschnittstelle eingibt. Die Sensorsignale können somit von einem oder mehreren entfernten computerbasierten Einheiten eingelesen und verarbeitet werden, wie in Fig. 2 oben dargestellt, über das Internet www. Zusätzlich werden die Konfigurationseinstellungen des Anwenders bei der Konfiguration der Wachprogrammabschnitte verrechnet.

So kann unter anderem konfiguriert werden, welche der in der Fahrzeugwaschanlage 1 verbauten Aggregate für den Waschvorgang betrieben werden sollen (z.B. nur die Vorreinigungsaggregate und kein Trocknungsaggregat) und/oder wie bzw. in welchem Modus und in welcher Reihenfolge sie betrieben werden sollen. Folgende Konfigurationen sind z.B. möglich:
- mit welchem Reinigungsprodukt das Aggregat beschickt werden soll,
- in welcher Form das Reinigungsprodukt appliziert werden soll: z.B. geschäumt oder nicht geschäumt. Wird das Produkt beispielsweise in geschäumter Form appliziert, dann ist die Oberflächenhaftung erhöht. Dies hat wiederum Einfluss auf die Einwirkzeit (hier: längere Einwirkzeit)
- wie lange die Einwirkzeit des Reinigungs- und/oder Pflegemittels auf dem Fahrzeug(teil) sein soll
- wie hoch die Konzentration des Reinigungs- und/oder Pflegemittels sein soll. Z.B. bei Detektion einer Feuchtigkeit auf der Fahrzeugoberfläche muss eine höhere Dosierung eines Vorreinigers angewendet werden, um eine bestimmte/gewünschte Dosierung zu erhalten. Dies wird automatisch erfasst und das Vorreinigeraggregat wird entsprechend angesteuert.
- Welche Wasserqualität angewendet werden soll. So kann es konfiguriert werden, ob Frischwasser in hoher Qualität oder Wasser aus einem gespeicherten Vorratskreislaufsystem mit niedrigerer Qualität oder Wasser in aufbereiteter Form (z.B. in enthärteter Form als Osmose-Wasser) verwendet werden soll.
- In welcher Qualität die Reinigungs- und/oder Pflegemittel auf den jeweiligen Waschaggregaten verwendet werden soll (z.B. auf einem ersten Waschaggregat (Vorreinigungsaggregat) in einer hochwertigen Form und auf einem zweiten Waschaggregat (Felgenreinigungsaggregate) in niedrigwertiger Form). Dabei können die einzelnen Waschaggregate (Bürsten, Sprühsysteme etc.), die innerhalb ein und desselben Waschprozesses angewendet werden auch unterschiedliche konfiguriert werden.

Die vorstehend aufgeführten Beispiele von Konfigurationen können jeweils einzeln ausgebildet sein oder auch kombiniert zur Anwendung kommen. In einer bevorzugten Ausführungsform der Erfindung bezieht sich die Erfindung auf die Ansteuerung einer Portalwaschanlage 1. In diesem Fall kann die Vorschubgeschwindigkeit des mobilen Portals auch über die Zeit des Waschvorganges variiert werden. So ist es z.B. möglich, eine geringere Portalvorschubgeschwindigkeit für ein erstes Aggregat und eine andere Geschwindigkeit für ein zweites Aggregat zu konfigurieren. In einer weiteren Ausbildung der Erfindung kann die Einwirkzeit von - gegebenenfalls unterschiedlichen - Reinigungs- und/oder Pflegesubstanzen konfiguriert werden. Damit kann die Wäsche wesentlich flexibler auf den jeweiligen Anwendungsfall hin ausgerichtet und definiert werden. Auch ist es möglich, die einzelnen Aggregate der Portalwaschanlage 1 jeweils einzeln, unabhängig und ggf. unterschiedlich und dediziert anzusteuern.

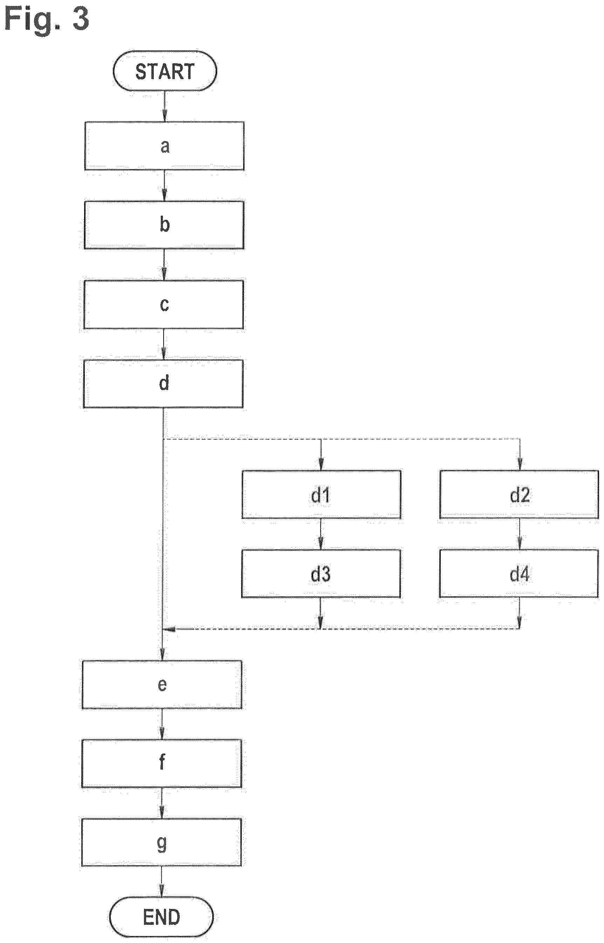

**Figur 3** ist ein Ablaufdiagramm gemäß einer bevorzugten Ausführung der Erfindung. Nach dem Start des Verfahrens werden in **Schritt a** die Sensordaten erfasst. Die Sensordaten können gemäß einer Ausführungsvariante auch die eingestellten Konfigurationen des Anwenders umfassen. Es kann z.B. darüber hinaus konfiguriert werden, dass nur bestimmte Sensordaten bei der Berechnung der Waschprogrammabschnitte in Schritt b berücksichtigt werden sollen. Das Berechnen der Waschprogrammabschnitte in **Schritt b** wird in Antwort auf die bzw. auf Basis der erfassten Sensordaten ausgeführt. Dabei werden bevorzugt auch die Optimierungskriterien des Anwenders berücksichtigt, die er unmittelbar vor dem Waschvorgang über das Bedienterminal UI für die jeweilige Wäsche oder mittelbar für mehrere Wäschen eingeben kann. Im letzteren Fall kann der Anwender definieren, dass seine Einstellungen, Konfigurationen und/oder Optimierungskriterien für all seine Wäschen gelten sollen. Dazu werden seine Eingaben in einem Speicher MEM gespeichert. Die errechneten Waschprogrammabschnitte werden in **Schritt c** an eine Ein- und Ausgabeeinheit, z.B. in Form eines Bedienterminals, weitergeleitet und dort für den Anwender zur Anzeige gebracht. Alternativ können die errechneten Waschprogrammabschnitte auch an eine vorher eingegebene Adresse gesendet werden. Bei der Adresse kann es sich z.B. um eine Emailadresse handeln oder um die IP-Adresse eines Endgerätes des Anwenders auf dem eine - z.B. browserbasierte - Applikation geladen ist, über die der Anwender ein Computerprogramm starten und ausführen kann zur Darstellung der errechneten Waschprogrammabschnitte und zur Auswahl zumindest eines Waschprogrammabschnittes und zum Einlesen der Auswahlsignale sowie zum Zurücksenden der Auswahlsignale an die Steuereinheit 10. In **Schritt d** werden die von der Steuereinheit 10 berechneten Waschprogrammabschnitte dargestellt.

Wie in Fig. 3 angedeutet, kann das Verfahren jetzt entweder mit Schritt e und dem Erfassen von Auswahlsignalen des Anwenders (zur Auswahl der dargestellten und berechneten Waschprogrammabschnitte) fortgesetzt werden oder alternativ kann in **Schritt d1** ein Anzeigen von Konfigurationseinstellungen erfolgen. Daraufhin hat der Anwender die Gelegenheit, bestimmte individuelle Einstellungen und Konfigurationen für seine geplante Wäsche einzugeben (wie vorstehend beschrieben: Einstellungen hinsichtlich der Einwirkzeit, der Qualität und/oder Dauer der zu applizierenden Substanzen, des Energieverbrauchs oder z.B. der Vorschubgeschwindigkeit des Portals etc.). Seine Einstellungen werden in Form von Konfigurationssignalen in **Schritt d3** erfasst und vorzugsweise gespeichert. Weiterhin ist es in **Schritt d2** möglich, Optimierungskriterien (z.B. "Energiesparende Wäsche") anzuzeigen. In **Schritt d4** werden dann die vom Anwender eingegebenen Optimierungssignale erfasst. Es ist auch möglich, alle vorstehend erwähnten Optionen zu kombinieren. Dann ist es möglich, dass der Anwender auf der Benutzerschnittstelle, die auf einem Bedienterminal ausgebildet sein kann, Konfigurationseinstellungen, Optimierungskriterien und Auswahlsignale eingibt. Die eingegebenen Signale werden in **Schritt e** erfasst.

In einer bevorzugten Ausführungsform der Erfindung werden die erfassten Signale einer Überprüfungsrechnung auf Konsistenz zugeführt. Die Konsistenzprüfung wird vorzugsweise auf der Steuereinheit 10 ausgeführt. In diesem Fall werden die erfassten Signale an selbige zur Überprüfung übertragen und je nach Ergebnis der Überprüfung werden dem Anwender dann auf der Benutzeroberfläche UI das Ergebnis mitgeteilt. Bei einer festgestellten Inkonsistenz wird er zur erneuten Eingabe aufgefordert, bei der nur die zulässig auswählbaren Eingabefelder oder Einstellungen aus einem angezeigten Menü aktivierbar sind. Der Anwender hat auch die Möglichkeit, seine Eingabe zu korrigieren.

In **Schritt f** werden dann auf Basis aller - ggf. auf Konsistenz und Zulässigkeit überprüfen - Eingaben des Anwenders Steuerbefehle B berechnet und in **Schritt g** zur Ansteuerung und zum Betrieb der Waschanlage verwendet. Danach kann das Verfahren enden oder für den nächsten Anwender wiederholt ausgeführt werden.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren. Es liegt somit z.B. ebenso im Rahmen der Erfindung neben der als Bedienterminal ausgebildeten Ein- und Ausgabeeinheit alternativ oder kumulativ andere Schnittstelleninstanzen auszubilden. So kann es in einer Weiterbildung der Erfindung beispielsweise vorgesehen sein, alle Signale, die auf der Ein- und Ausgabeeinheit zur Anzeige gebracht werden sollen und alle Signale seitens des Anwenders, die dort erfasst werden sollen, zusätzlich auch an elektronischen Endgeräten zur Verfügung zu stellen, wie z.B. Smartphones, Tablets oder Mobilfunkgeräte des Anwenders, die über eine drahtlose Kommunikationsverbindung mit der Steuereinheit 10 in Kommunikationsverbindung stehen (z.B. Mobilfunkverbindung). Dazu kann der Anwender bei den Konfigurationseinstellungen angeben, an welche eineindeutige Geräteadresse er den Signalaustausch übermittelt haben möchte. So könnte er sein Waschprogramm auch von zuhause im Vorfeld oder von seinem Tablet-PC steuern. Dabei kann es sich z.B. um handbetätigte oder Stylus-betätigte Bedienoberflächen handeln. Für einen Fachmann ist es insbesondere offensichtlich, dass die Erfindung nicht nur für Portalwaschanlagen angewendet werden kann, sondern auch für Waschstraßen, deren Betrieb in Abhängigkeit von Anwendersignalen auf Bedienterminals gesteuert wird.

Des Weiteren können die Bauteile der sensor-getriggerten Fahrzeugwaschanlage 1 auf mehrere physikalische Produkte verteilt realisiert sein. Insbesondere können die Fahrzeugwaschanlage 1, die Sensoreinheit S, die Steuereinheit 10 und/oder das Bedienterminal UI als verteiltes System ausgebildet sein mit in Datenaustausch stehenden, baulich separaten Einheiten.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 10: Steuereinheit
- 100: Steuerlogik, insbesondere elektronische Steuerlogikschaltung
- 102: Optimierungsmodul
- 104: Konfigurationsmodul
- B: Steuerbefehl
- UI: User Interface
- NW: Netzwerk
- S: Sensoreinheit
- MEM: Speicher
- 1: Fahrzeugwaschanlage
- 11: Haltetraverse
- 12: linke seitliche vertikale Waschbürste
- 13: rechte seitliche vertikale Waschbürste
- 14: linke Felgenbürste
- 15: rechte Felgenbürste
- 16: linker Portalträger
- 17: rechter Portalträger
- 18: Horizontale Dachwaschbürste
- 19: Waschanlageninternes Steuermodul
- www: Internet
- Z: Zentraler Server

- a: Erfassen von Sensorsignalen
- b: Berechnen von Waschprogrammabschnitten
- c: Weiterleiten der berechneten Waschprogrammabschnitte an eine Benutzerschnittstelle
- d: Anzeigen der berechneten Waschprogrammabschnitte auf der Benutzerschnittstelle
- d1: Anzeigen von Konfigurationseinstellungen
- d3: Erfassen von Konfigurationssignalen
- d3: Anzeigen von Optimierungskriterien
- d4: Erfassen von Optimierungssignalen
- e: Einlesen von Auswahlsignalen
- f: Erzeugen von Steuerbefehlen
- g: Ansteuern und Betreiben der Fahrzeugwaschanlage auf Basis der Steuerbefehle

## Patentansprüche

1. Fahrzeugwaschanlage (1) mit folgenden in Datenaustausch stehenden Modulen:
- Einer Schnittstelle zu einer Sensoreinheit (S), über die Sensorsignale eingelesen und zur Berechnung von Steuerbefehlen an eine Steuereinheit (10) weitergeleitet werden;
- Der Steuereinheit (10), die dazu bestimmt ist, in Antwort auf die empfangenen Sensorsignale mittels einer Steuerlogik (100) Waschprogrammabschnitte zur Steuerung der Fahrzeugwaschanlage (1) zu berechnen und zur Anzeige auf einer Ein- und Ausgabeeinheit (UI) bereitzustellen;
- Der als Benutzerschnittstelle fungierenden Ein- und Ausgabeeinheit (UI), die dazu bestimmt ist, die von der Steuereinheit (10) berechneten Waschprogrammabschnitte auszugeben und wobei die Ein- und Ausgabeeinheit (UI) weiter dazu bestimmt ist, Auswahlsignale zur Auswahl der angezeigten, berechneten Waschprogrammabschnitte zu erfassen und zur Steuerung der Fahrzeugwaschanlage (1) zu verwenden.

2. Fahrzeugwaschanlage (1) nach Patentanspruch 1, bei der eine Sensoreinheit (S) außerhalb der Fahrzeugwaschanlage (1) und nicht an Bauteilen der Fahrzeugwaschanlage (1) angeordnet ist.

3. Fahrzeugwaschanlage (1) nach Patentanspruch 1 oder 2, die mehrere Aggregate umfasst, wobei die Aggregate modular und dediziert von der Steuereinheit (10) angesteuert werden.

4. Steuereinheit (10) zur Ansteuerung einer Fahrzeugwaschanlage (1), wobei die Steuereinheit (10) mit einer als Benutzerschnittstelle fungierenden Ein- und Ausgabeeinheit (UI) in Datenaustausch steht, die zur Anzeige einer Menge von Waschprogrammen mit Waschprogrammabschnitten und zur Erfassung einer Auswahl der angezeigten Waschprogrammabschnitte bestimmt ist, und wobei die Steuereinheit (10) dazu bestimmt ist, aus der erfassten Auswahl Steuerbefehle (B) zur Ansteuerung der Fahrzeugwaschanlage (1) zu berechnen, **dadurch gekennzeichnet, dass** die Steuereinheit (10) Sensorsignale einer Sensoreinheit (S) empfängt und dazu bestimmt ist, in Antwort auf die empfangenen Sensorsignale mittels einer Steuerlogik (100) Waschprogrammabschnitte zu berechnen und zur Anzeige auf der Ein- und Ausgabeeinheit (UI) bereitzustellen.

5. Steuereinheit (10) nach dem vorhergehenden auf die Steuereinheit bezogenen Patentanspruch, **dadurch gekennzeichnet, dass** die Steuerlogik (100) der Steuereinheit (10) dazu ausgebildet ist, aus den empfangenen Sensorsignalen der Sensoreinheit (S) einen IST-Zustand zu ermittelten und den IST-Zustand mit einem in einem Speicher (MEM) abgelegten Referenz-Zustand zu vergleichen, um eine zustandsabhängige Berechnung der Waschprogrammabschnitte auszuführen.

6. Steuereinheit (10) nach einem der vorhergehenden auf die Steuereinheit bezogenen Patentansprüche, **dadurch gekennzeichnet, dass** die Steuerlogik (100) ein Optimierungsmodul (102) umfasst, das die berechneten Waschprogrammabschnitte hinsichtlich unterschiedlicher Optimierungskriterien optimiert, umfassend eine Optimierung hinsichtlich einer Dosierung von Reinigungsmitteln, eines Wasserverbrauchs und/oder hinsichtlich eines Energieverbrauchs optimiert.

7. Steuereinheit (10) nach einem der vorhergehenden auf die Steuereinheit bezogenen Patentansprüche, **dadurch gekennzeichnet, dass** die Steuerlogik (100) ein Konfigurationsmodul (104) umfasst, das dazu bestimmt ist, Konfigurationseinstellungen, die auf der Ein- und Ausgabeeinheit (UI) erfasst werden, einzulesen.

8. Steuereinheit (10) nach einem der vorhergehenden auf die Steuereinheit bezogenen Patentansprüche, **dadurch gekennzeichnet, dass** die Sensoreinheit (S) verteilt ausgebildet ist und eine Mehrzahl von Sensoren an unterschiedlichen Bauteilen umfasst oder mit externen Sensoren in Datenaustausch steht.

9. Steuereinheit (10) nach einem der vorhergehenden auf die Steuereinheit bezogenen Patentansprüche, **dadurch gekennzeichnet, dass** die Sensoreinheit (S) Sensoren am Fahrzeug oder externe Sensoren zur Erfassung von technischen Umgebungsparametern umfasst, die unterschiedliche physikalische Messwerte eines Fahrzeugs oder einer Waschumgebung erfassen, insbesondere einen Temperatursensor, einen Zeitsensor, einen Luftfeuchtigkeitssensor, einen Sensor zur Erfassung einer Fahrzeuggröße oder eines Fahrzeugverschmutzungsgrades.

10. Steuereinheit (10) nach einem der vorhergehenden auf die Steuereinheit bezogenen Patentansprüche, **dadurch gekennzeichnet, dass** die Steuereinheit (10) einen Schalter umfasst, über den sie aktivierbar und deaktivierbar ist.

11. Steuereinheit (10) nach einem der vorhergehenden auf die Steuereinheit bezogenen Patentansprüche, **dadurch gekennzeichnet, dass** die Steuereinheit (10) einen Speicher (MEM) umfasst, der dazu ausgebildet ist, die mittels der Steuerlogik (100) berechneten Waschprogrammabschnitte zu speichern.

12. Verfahren zur Ansteuerung einer Fahrzeugwaschanlage (1), umfassend folgende Verfahrensschritte:
- Erfassen (a) von Sensorsignalen
- Berechnen (b) von Waschprogrammabschnitten in Antwort auf die erfassten Sensorsignale
- Weiterleiten (c) der berechneten Waschprogrammabschnitte an eine Ein- und Ausgabeeinheit (UI) zur Anzeige (d)
- Einlesen von Auswahlsignalen (e) zur Auswahl eines der angezeigten Waschprogrammabschnitte auf der Ein- und Ausgabeeinheit (UI)
- Erzeugen (f) von Steuerbefehlen (B) zur Ansteuerung (g) der Fahrzeugwaschanlage (1) auf Basis der erfassten Auswahlsignale.

13. Verfahren nach dem vorhergehenden Verfahrensanspruch, bei dem auf der Ein- und Ausgabeeinheit (UI) Auswahlsignale erfasst werden, wobei die Auswahlsignale Konfigurationseinstellungen oder Optimierungskriterien für einen Waschprozess der Fahrzeugwaschanlage (1) umfasst und wobei die Steuerbefehle (B) in Antwort auf die erfassten Auswahlsignale erzeugt werden.

14. Verfahren nach einem der vorhergehenden Verfahrensansprüche, bei dem einzelne Aggregate der Fahrzeugwaschanlage (1) dediziert und mit Aggregatspezifischen Steuerbefehlen (B) angesteuert werden und gegebenenfalls auch unterschiedlich angesteuert werden können.

15. Verfahren nach einem der vorhergehenden Verfahrensansprüche, bei dem in Antwort auf die erfassten Sensorsignale eine Ausgabe der erfassten Sensorsignale auf der Eingabe- und Ausgabeeinheit (UI) erfolgt.

16. Verfahren nach einem der vorhergehenden Verfahrensansprüche, bei dem die ausgeführten Steuerbefehle (B) während des Betriebs der Fahrzeugwaschanlage (1) überwacht und einer Berechnungseinheit zugeführt werden, die automatisch die Kosten für den Waschprozess berechnet und an eine Ausgabeeinheit weiterleitet.

17. Computerprogrammprodukt, das in einen internen Speicher eines digitalen Computers eines Systems geladen werden kann und Softwareroutinen umfasst, mit denen die Schritte des Verfahrens gemäß den vorstehenden Verfahrensansprüchen ausgeführt werden, wenn die Softwareroutinen auf dem digitalen Computer ausgeführt werden.

## Claims

1. Vehicle washing installation (1) comprising the following modules in data exchange:
- an interface to a sensor unit (S), via which sensor signals are read-in and relayed to a control unit (10) in order to calculate control commands;
- the control unit (10) which is intended, in response to the received sensor signals and by means of a control logic (100), to calculate washing program sections in order to control the vehicle washing installation (1) and to provide said washing program sections for display on an input and output unit (UI);
- the input and output unit (UI) which operates as a user interface and is intended to output the washing program sections calculated by the control unit (10) and wherein the input and output unit (UI) is further intended to detect selection signals for selection of the displayed, calculated washing program sections and to use them to control the vehicle washing installation (1) .

2. Vehicle washing installation (1) as claimed in claim 1, in which a sensor unit (S) is disposed outside the vehicle washing installation (1) and not on components of the vehicle washing installation (1).

3. Vehicle washing installation (1) as claimed in claim 1 or 2, which comprises a plurality of assemblies, wherein the assemblies are activated in a modular and dedicated manner by the control unit (10).

4. Control unit (10) for activating a vehicle washing installation (1), wherein the control unit (10) is in data exchange with an input and output unit (UI) which functions as a user interface and is intended to display a number of washing programs with washing program sections and to detect a selection of the displayed washing program sections, and wherein the control unit (10) is intended to calculate, from the detected selection, control commands (B) for activation of the vehicle washing installation (1), **characterised in that** the control unit (10) receives sensor signals from a sensor unit (S) and is intended, in response to the received sensor signals and by means of a control logic (100), to calculate washing program sections and to display them on the input and output unit (UI).

5. Control unit (10) as claimed in the preceding claim relating to the control unit, **characterised in that** the control logic (100) of the control unit (10) is designed to determine, from the received sensor signals of the sensor unit (S), an ACTUAL-state and to compare the ACTUAL-state to a reference state stored in a memory (MEM) in order to carry out a state-dependent calculation of the washing program sections.

6. Control unit (10) as claimed in any one of the preceding claims relating to the control unit, **characterised in that** the control logic (100) includes an optimisation module (102) which optimises the calculated washing program sections with respect to different optimisation criteria, including optimisation with respect to metering of cleaning agents, water consumption and/or with respect to energy consumption.

7. Control unit (10) as claimed in any one of the preceding claims relating to the control unit, **characterised in that** the control logic (100) includes a configuration module (104) which is intended to read-in configuration settings which are detected at the input and output unit (UI).

8. Control unit (10) as claimed in any one of the preceding claims relating to the control unit, **characterised in that** the sensor unit (S) is designed in a distributed manner and comprises a plurality of sensors on different components or is in data exchange with external sensors.

9. Control unit (10) as claimed in any one of the preceding claims relating to the control unit, **characterised in that** the sensor unit (S) comprises sensors on the vehicle or external sensors for detecting technical environmental parameters, which detect different physical measurement values of a vehicle or of a washing environment, in particular a temperature sensor, a time sensor, an air humidity sensor, a sensor for detection of a vehicle size or a degree of dirt on the vehicle.

10. Control unit (10) as claimed in any one of the preceding claims relating to the control unit, **characterised in that** the control unit (10) comprises a switch by which it can be activated and deactivated.

11. Control unit (10) as claimed in any one of the preceding claims relating to the control unit, **characterised in that** the control unit (10) comprises a memory (MEM) which is designed to store washing program sections calculated by means of the control logic (100).

12. Method of activating a vehicle washing installation (1) comprising the following method steps:
- detecting (a) sensor signals,
- calculating (b) washing program sections in response to the detected sensor signals,
- relaying (c) the calculated washing program sections to an input and output unit (UI) for display (d),
- reading-in selection signals (e) for selection of one of the displayed washing program sections on the input and output unit (UI),
- generating (f) control commands (B) for activation (g) of the vehicle washing installation (1) on the basis of the detected selection signals.

13. Method as claimed in the preceding method claim, in which selection signals are detected at the input and output unit (UI), wherein the selection signals include configuration settings or optimization criteria for a washing process of the vehicle washing installation (1), and wherein the control commands (B) are generated in response to the detected selection signals.

14. Method as claimed in any one of the preceding method claims, in which individual assemblies of the vehicle washing installation (1) are activated in a dedicated manner and with assembly-specific control commands (B) and optionally can also be activated differently.

15. Method as claimed in any one of the preceding method claims, in which, in response to the detected sensor signals, the detected sensor signals are output at the input and output unit (UI).

16. Method as claimed in any one of the preceding method claims, in which the executed control commands (B) are monitored during operation of the vehicle washing installation (1) and supplied to a calculation unit which automatically calculates the costs for the washing process and relays them to an output unit.

17. Computer program product which can be loaded into an internal memory of a digital computer of a system and includes software routines with which the steps of the method as claimed in the preceding method claims are executed when the software routines are executed on the digital computer.

## Revendications

1. Installation de lavage de véhicules (1) comprenant les modules suivants en échange de données :
- une interface avec une unité de capteurs (S) via laquelle des signaux de capteurs sont lus et transmis à une unité de commande (10) pour le calcul d'ordres de commande ;
- l'unité de commande (10) qui est conçue pour, en réponse aux signaux de capteurs reçus, au moyen d'une logique de commande (100), calculer des sections de programme de lavage pour commander l'installation de lavage de véhicules (1) et les rendre disponibles pour affichage sur une unité d'entrée et de sortie (Ul) ;
- l'unité d'entrée et de sortie (Ul) faisant fonction d'interface utilisateur qui est conçue pour délivrer les sections de programme de lavage calculées par l'unité de commande (10) et l'unité d'entrée et de sortie (Ul) étant en outre conçue pour saisir des signaux de sélection pour sélectionner les sections de programme de lavage calculées affichées et à les utiliser pour commander l'installation de lavage de véhicules (1).

2. Installation de lavage de véhicules (1) selon la revendication 1, dans laquelle une unité de capteurs (S) est disposée à l'extérieur de l'installation de lavage de véhicules (1) et non sur des composants de l'installation de lavage de véhicules (1).

3. Installation de lavage de véhicules (1) selon la revendication 1 ou 2, qui comprend plusieurs groupes, les groupes étant commandés de manière modulaire et dédiée par l'unité de commande (10).

4. Unité de commande (10) pour commander une installation de lavage de véhicules (1), l'unité de commande (10) étant en échange de données avec une unité d'entrée et de sortie (Ul) faisant fonction d'interface utilisateur, qui est conçue pour afficher un ensemble de programmes de lavage avec des sections de programme de lavage et pour saisir une sélection des sections de programme de lavage affichées, et
l'unité de commande (10) étant conçue pour calculer des ordres de commande (B) pour commander l'installation de lavage de véhicules (1) à partir de la sélection saisie, **caractérisée en ce que** l'unité de commande (10) reçoit des signaux de capteurs d'une unité de capteurs (S) et est conçue pour, en réponse aux signaux de capteurs reçus, au moyen d'une logique de commande (100), calculer des sections de programme de lavage et les rendre disponibles pour affichage sur l'unité d'entrée et de sortie (Ul).

5. Unité de commande (10) selon la revendication précédente relative à l'unité de commande, **caractérisée en ce que** la logique de commande (100) de l'unité de commande (10) est conçue pour, à partir des signaux de capteurs reçus de l'unité de capteurs (S), déterminer un état réel et pour comparer l'état réel avec un état de référence enregistré dans une mémoire (MEM) pour effectuer un calcul des sections de programme de lavage en fonction de l'état.

6. Unité de commande (10) selon l'une des revendications précédentes relatives à l'unité de commande, **caractérisée en ce que** la logique de commande (100) comprend un module d'optimisation (102) qui optimise les sections de programme de lavage calculées par rapport à différents critères d'optimisation, comprenant une optimisation par rapport à un dosage de produits de nettoyage, une consommation d'eau et/ou une consommation d'énergie.

7. Unité de commande (10) selon l'une des revendications de précédentes relatives à l'unité de commande, **caractérisée en ce que** la logique de commande (100) comprend un module de configuration (104) qui est conçu pour lire des réglages de configuration saisis sur l'unité d'entrée et de sortie (Ul).

8. Unité de commande (10) selon l'une des revendications précédentes relatives à l'unité de commande, **caractérisée en ce que** l'unité de capteurs (S) est conçue répartie et comprend une pluralité de capteurs sur différents composants ou est en échange de données avec des capteurs externes.

9. Unité de commande (10) selon l'une des revendications précédentes relatives à l'unité de commande, **caractérisée en ce que** l'unité de capteurs (S) comprend des capteurs sur le véhicule ou des capteurs externes pour détecter des paramètres environnementaux techniques qui détectent différentes valeurs de mesure physiques d'un véhicule ou d'un environnement de lavage, en particulier un capteur de température, un capteur de temps, un capteur d'humidité de l'air, un capteur pour détecter une taille de véhicule ou un degré de salissure de véhicule.

10. Unité de commande (10) selon l'une des revendications précédentes relatives à l'unité de commande, **caractérisée en ce que** l'unité de commande (10) comprend un commutateur au moyen duquel elle peut être activée et désactivée.

11. Unité de commande (10) selon l'une des revendications précédentes relatives à l'unité de commande, **caractérisée en ce que** l'unité de commande (10) comprend une mémoire (MEM) qui est conçue pour stocker les sections de programme de lavage calculées au moyen de la logique de commande (100).

12. Procédé de commande d'une installation de lavage de véhicules (1), comprenant les étapes de procédé suivantes :
- saisie (a) de signaux des capteurs
- calcul (b) de sections de programme de lavage en réponse aux signaux de capteurs saisis
- transmission (c) des sections de programme de lavage calculées à une unité d'entrée et de sortie (Ul) pour affichage (d)
- lecture de signaux de sélection (e) pour sélectionner une des sections de programme de lavage affichées sur l'unité d'entrée et de sortie (Ul)
- génération (f) d'ordres de commande (B) pour commander (g) l'installation de lavage de véhicules (1) sur la base des signaux de sélection saisis.

13. Procédé selon la revendication de procédé précédente, dans lequel des signaux de sélection sont saisis sur l'unité d'entrée et de sortie (Ul), les signaux de sélection comprenant des réglages de configuration ou des critères d'optimisation pour un processus de lavage de l'installation de lavage de véhicules (1) et dans lequel les ordres de commande (B) sont générés en réponse aux signaux de sélection saisis.

14. Procédé selon l'une des revendications de procédé précédentes, dans lequel des groupes individuels de l'installation de lavage de véhicules (1) sont commandés de manière dédiée et avec des ordres de commande spécifiques aux groupes (B) et, le cas échéant, peuvent également être commandés différemment.

15. Procédé selon l'une des revendications de procédé précédentes, dans lequel, en réponse aux signaux de capteurs saisis, les signaux de capteurs saisis sont délivrés sur l'unité d'entrée et de sortie (Ul).

16. Procédé selon l'une des revendications de procédé précédentes, dans lequel, pendant le fonctionnement de l'installation de lavage de véhicules (1), les ordres de commande (B) exécutés sont surveillés et amenés à une unité de calcul qui calcule automatiquement les coûts du processus de lavage et les transmet à une unité de sortie.

17. Produit programme d'ordinateur qui peut être chargé dans une mémoire interne d'un ordinateur numérique d'un système et comprend des routines logicielles avec lesquelles les étapes du procédé selon les revendications de procédé précédentes sont exécutées lorsque les routines logicielles sont exécutées sur l'ordinateur numérique.
